# EUROPÄISCHE PATENTSCHRIFT

(11) **EP 1 005 889 B1**
(45) Veröffentlichungstag und Bekanntmachung des Hinweises auf die Patenterteilung: **30.03.2005**
(21) Anmeldenummer: 99810992.0
(22) Anmeldetag: 02.11.1999
(51) Int. Cl.: B01D 3/00, B01D 53/18

(54) **Flüssigkeitsverteiler für Packungskolonnen**
Liquid distributor for packed columns
Distributeur de liquide pour des colonnes garnies

(30) Priorität: 30.11.1998 EP 98811187
(43) Veröffentlichungstag der Anmeldung: 07.06.2000
(73) Patentinhaber: Sulzer Chemtech AG, 8404 Winterthur (CH)
(72) Erfinder: Fischer, Markus, 78462 Konstanz (DE); Moser, Felix, 8408 Winterthur (CH)
(74) Vertreter: Sulzer Management AG

(56) Entgegenhaltungen:
- EP-A- 0 070 917
- EP-A- 0 282 753
- DE-A- 3 013 783
- US-A- 4 159 291

## Beschreibung

Die Erfindung betrifft einen Flüssigkeitsverteiler, insbesondere für Packungskolonnen, gemäss Oberbegriff von Anspruch 1 sowie eine Kolonne mit solchem Flüssigkeitsverteiler.

Aus der EP 0 282 753 ist ein derartiger Flüssigkeitsverteiler bekannt, bei dem Flüssigkeit aus Austrittsöffnungen von rohr- oder trogförmigen Verteilorganen austreten und auf als Prallplatten ausgebildete Schirme (dort Leitwände genannt) strahlförmig auftreffen. Die Flüssigkeit prallt mit relativ hoher Geschwindigkeit auf dem Schirm auf und verteilt sich auf diesem als parabelförmiger Film. Dieser Flüssigkeitsverteiler ist für eine Packungskolonne vorgesehen, in der ein Gas im Gegenstrom zur Flüssigkeit geführt wird. Eine Mehrzahl von parallelen Verteilorganen unterteilt das nach oben strömende Gas in mehrere Teilströme. Abtropfkanten der Schirme sind unter den Verteilorganen innerhalb von Stauzonen der Gasströmung angeordnet.

Mit Trennkolonnen, die "Wirbelpackungen" (siehe EP 0 418 338) enthalten, sind Stoffaustauschverfahren durchführbar, bei denen für die zu behandelnden Gase und Flüssigkeiten sehr grosse Volumen- bzw. Massenströme möglich sind. Diese grossen Ströme ergeben jedoch ein Problem: Die auf die Schirme auftreffenden Flüssigkeitsstrahlen erzeugen Spritzer, die eine Freisetzung feiner Tropfen zur Folge haben. Diese Tropfen sinken im Gasraum relativ langsam ab und werden im Bereich der Abtropfkanten von dem nach oben strömenden Gas mitgerissen. Eine durch Stoffaustausch zu erzielende Trennwirkung wird dadurch beeinträchtigt. Es ist daher Aufgabe der Erfindung, einen Flüssigkeitsverteiler für Packungskolonnen zu schaffen, bei dem die genannte Problematik mit der Spritzerbildung behoben oder zumindest entschärft ist. Diese Aufgabe wird durch den in Anspruch 1 definierten Flüssigkeitsverteiler gelöst.

Der Flüssigkeitsverteiler für Packungskolonnen umfasst mindestens ein rohroder trogförmiges Verteilorgan, das zu einer Abgabe von Flüssigkeit in Form von Strahlen Austrittsöffnungen aufweist. Vor den Austrittsöffnungen sind Schirmen angeordnet, auf denen die auftreffenden Flüssigkeitsstrahlen zu abfliessenden Flüssigkeitsfilmen umgeformt werden. Die Austrittsöffnungen schirmen die Austrittsöffnungen vor einem nach oben strömenden Gasstrom ab. Bei einer maximalen Abgabe von Flüssigkeit treffen die Flüssigkeitsstrahlen auf den Schirmen unter Winkeln auf, die kleiner als 60°, vorzugsweise kleiner als 10° sind.

Der erfindungsgemässe Flüssigkeitsverteiler lässt sich selbstverständlich auch mit Vorteil in Kolonnen einsetzen, die andere geordneten Packungen als die "Wirbelpackung" enthalten, beispielsweise solche mit "Kreuzkanalstruktur" (Packung mit vertikalen Lagen von gewellten Folien, die sich offen kreuzende Kanäle bilden; siehe z. B. EP 0 070 917). Als Packungen kommen auch Schüttungen von Füllkörpern in Frage. Ausser Stoffaustausch ist mit Packungen selbstverständlich auch Wärmeübertragung zwischen einem Gasund einem Flüssigkeitsstrom durchführbar.

Die abhängigen Ansprüche 2 bis 6 beziehen sich auf vorteilhafte Ausführungsformen des erfindungsgemässen Flüssigkeitsverteilers. Gegenstand der Ansprüche 7 bis 10 ist eine Kolonne mit einem erfindungsgemässen Flüssigkeitsverteiler. Mit diesem Flüssigkeitsverteiler wird ein weiteres Problem gelöst, das bei dem aus der EP 0 282 753 bekannten Verteiler auftritt. Wegen einer asymmetrischen Anordnung der Prallwände sind die Strömungsverhältnisse im Gasstrom bei den Abtropfkanten ungünstig, weil sich nämlich keine stabilen Flüssigkeitsfilmen aufgrund von Querströmungen um die Abtropfkanten ausbilden können. Je nach Gasbelastung werden Sprühtröpfchen in gösseren oder kleineren Mengen nach oben mitgerissen.

Nachfolgend wird die Erfindung anhand der Zeichnungen erläutert. Es zeigen:
- Fig. 1: ausschnittsweise einen Längsschnitt durch eine Kolonne mit Packung und Flüssigkeitsverteiler,
- Fig. 2a, b: geometrische Details zu den Strömungsverhältnissen in einem Verteilorgan eines erfindungsgemässen Flüssigkeitsverteilers,
- Fig. 3 - 5: drei Ausführungsformen solcher Verteilorgane,
- Fig. 6: einen streifenförmigen Abschnitt eines Schirms zu einem erfindungsgemässen Flüssigkeitsverteiler und
- Fig. 7: eine weitere Ausführungsform.

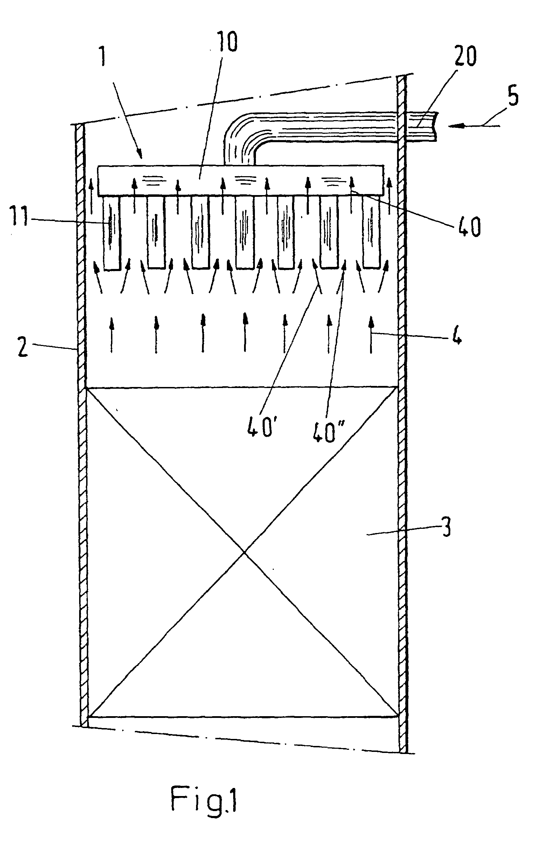

Die in Fig. 1 gezeigte Kolonne 2 enthält einen Flüssigkeitsverteiler 1 und eine Packung 3. Ein Gas 4 strömt in der Kolonne 2 nach oben, umströmt oberhalb der Packung 3 Verteilorgane 11 des Flüssigkeitsverteilers 1 und wird dadurch in eine Mehrzahl von Teilströme 40', 40" getrennt, die anschliessend Teilströme 40 bilden. Die Verteilorgane 11 empfangen eine zu verteilende Flüssigkeit 5 über eine Zuführleitung 20 und einen Vorverteiler 10.

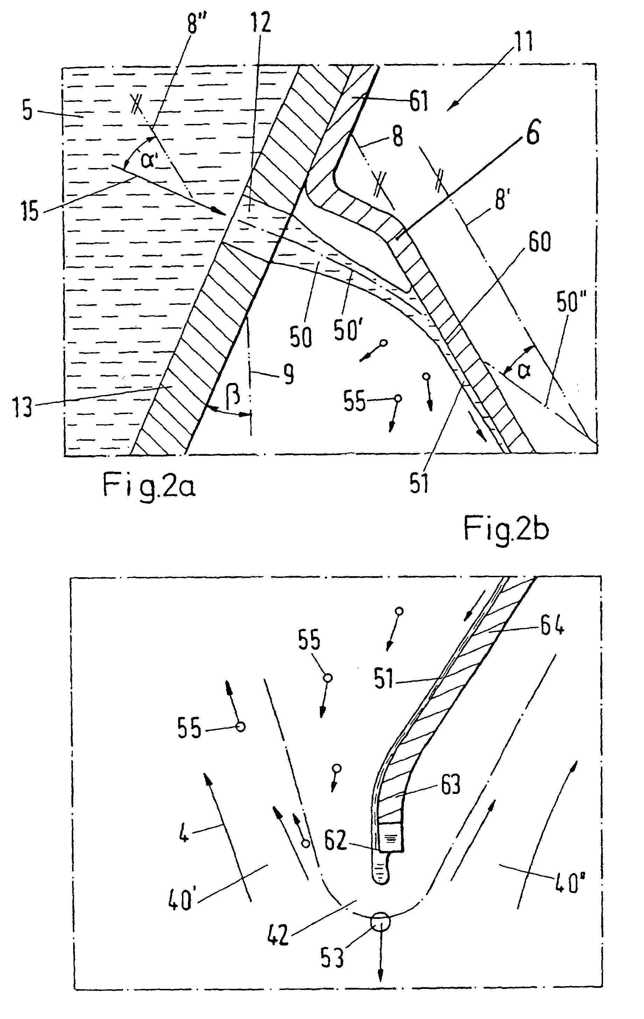

In Fig. 2a ist für einen erfindungsgemässen Verteiler 1 die Umgebung einer Austrittsöffnung 12 eines Verteilorgans 11 als Schnittbild dargestellt. Die Austrittsöffnung 12 befindet sich in einer geneigten Seitenwand 13. In der Regel ist die Seitenwand 13 vertikal; der gegen die Vertikale 9 gemessene Winkel β ist somit gleich Null. Die Flüssigkeit 5 strömt in Richtung 15 durch die Öffnung 12 aus, bildet anschliessend einen freien Strahl 50, dessen Mittellinie 50' der Schwerkraft folgend nach unten gekrümmt ist, und trifft in Richtung 50" auf einen vor der Öffnung 12 angeordneten Schirm 6 auf. Ein Auftreffbereich 60 des Schirms 6 ist hier als eben angenommen. Die strichpunktiert angegebenen Geraden 8, 8' und 8" sind Parallelen, die parallel zu der in dem Auftreffbereich 60 liegenden Ebene ist. Der Auftreffwinkel α, der von den Geraden 50" und 8' aufgespannt wird, ist etwas kleiner als der Winkel α' zwischen der Geraden 8" und der Ausströmrichtung 15. Der auf dem Schirm 6 auftreffende Flüssigkeitsstrahl 50 wird zu einem abfliessenden Flüssigkeitsfilm 51 umgeformt. Beim Auftreffen ergeben sich Spritzer, die feine Tröpfchen 55 entstehen lassen. Je kleiner der Auftreffwinkel α ist, desto geringer ist die Menge an freigesetzten Tröpfchen 55. Bei den Schirmen gemäss dem Stand der Technik treffen die Strahlen 50 weitgehend senkrecht auf (α = 90°), und es entstehen besonders viele Spritzer. Ist der Auftreffwinkel α gemäss der Erfindung kleiner als 60°, so fällt die ungünstige Spritzerbildung wesentlich geringer aus.

Der Schirm 6 ist an einem streifenförmigen Bereich 61 am Verteilorgan 11 befestigt und zwar so, dass ein Durchtritt von Gas 4 verhindert ist und somit die Austrittsöffnung 12 von dem nach oben strömenden Gasstrom 4 abgeschirmt ist.

Der Schirm 6 setzt sich über eine geschlossene Leitwand 64 - siehe Fig. 2b - bis zu einer Abtropfkante 62 fort, an der der Flüssigkeitsfilm 51 in Form von Tropfen 53 oder weiterhin als geschlossener Film abfällt. Die Abtropfkante 62 ist horizontal ausgerichtet und kann geradlinig oder gezackt ausgebildet sein. Die Abtropfkante 62 befindet sich in einer Stauzone 42 des Gases 4, in welcher das Abtropfen der Flüssigkeit 5 weitgehend ungestört durch die Strömung des Gases 4 erfolgt. Unmittelbar über der Abtropfkante 62 ist ein streifenförmiger Bereich 63 vorgesehen, der weitgehend in einer vertikalen Ebene liegt.

Die in der Auftreffzone 60 gebildeten Tröpfchen 55 sinken ab; sie werden in der Umgebung der Stauzone 42 von der Strömung 40' erfasst, nach oben getragen und in dem Teilstrom 40 (siehe Fig. 1) weiter transportiert. Aufgrund der erfindungsgemässen Massnahme ist die Menge der nach oben transportierten Tröpfchen 55 sehr gering und praktisch nicht mehr störend.

Der flache Auftreffwinkel a hat auch zur Folge, dass die parabelförmige Ausbreitung des Flüssigkeitsfilms auf dem Schirm 6 weniger stark vom Impuls des Flüssigkeitsstrahls 50 abhängt. Der Unterschied zwischen einer maximalen und einer minimalen Parabelbreite ist daher kleiner. Diese Tatsache erleichtert die Auslegung von Verteilern.

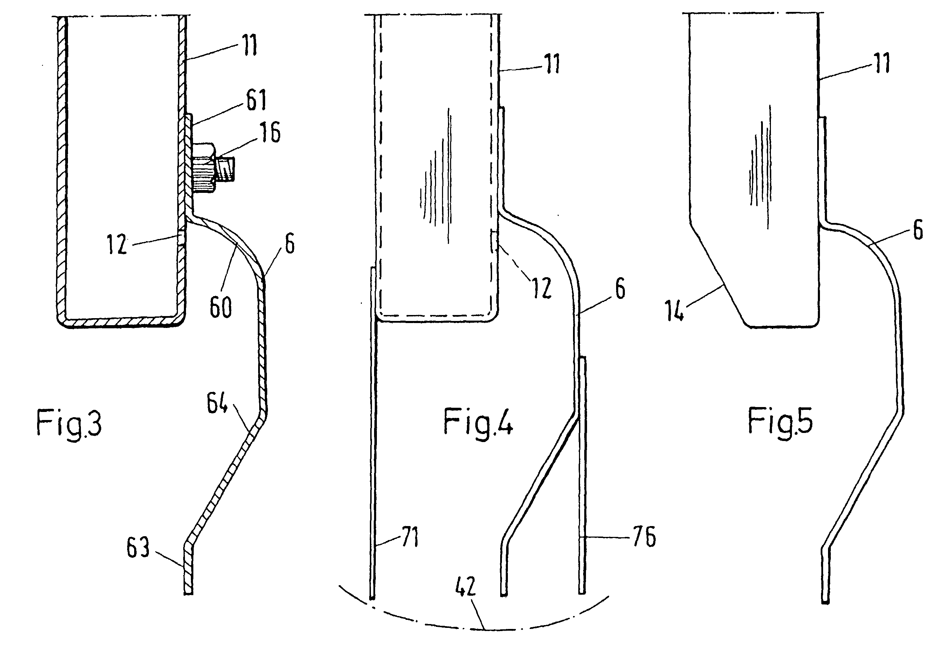

Fig. 3 zeigt einen Querschnitt durch den unteren Teil eines trogförmigen Verteilorgans 11. Der Schirm 6 hat in einem vertikalen sowie strahlparallelen Schnitt die Form einer sigmoiden Kurve, d.h. einer Kurve, die eine Wendestelle ihrer Krümmung aufweist. Diese Kurve kann ganz oder teilweise durch einen Streckenzug gegeben sein. In dem Bereich 60, in dem der Flüssigkeitsstrahl 50 auf den Schirm 6 auftrifft, ist die sigmoide Kurve nach unten gekrümmt. Sie weist dort insbesondere eine weitgehend konstante Krümmung auf. Der Auftreffbereich 60 ist so geformt, dass der Strahl 51 angenähert tangential auf dem Schirm 6 auftrifft. Der Schirm 6 ist an seinem oberen Teil 61 mit Schrauben 16 befestigt.

Durch den nach innen, d. h. unter das Verteilorgan 11 gebogenen Schirm 6 wird der Flüssigkeitsfilm 51 an der Abtropfkante 62 durch das entgegenströmende Gas 4 weit weniger gestört als bei bekannten Verteilern, bei denen die Leitflächen 64 vertikal und eben ausgebildet sind. Damit bleibt ein abfliessender Film stabil; es werden keine Flüssigkeitstropfen ab- und mit dem Gasstrom nach oben gerissen. Im Vergleich mit den bekannten Verteilern lassen sich die erfindungsgemässen Verteiler bei wesentlich höheren Gasbelastungen einsetzen.

Fig. 4 zeigt anhand einer Seitenansicht eine Ausführungsform, bei der im Bereich der Stauzone 42 flankierend zum Schirm 6 zusätzlich Schürzen 71 und 76 vorgesehen sind, mit welchen die Gasströmung günstig beeinflusst wird. Der Schirm 6 ist am Verteilorgan 11 angeschweisst (punktgeschweisst) oder angelötet.

Das Verteilorgan 11 und der Schirm 6 werden mit Vorteil so geformt, dass in der Umgebung der Stauzone 42 die Teilströme 40', 40" - siehe Figuren 1 und 2b - weitgehend spiegelsymmetrisch zueinander und bezüglich einer vertikalen Ebene durch die Abtropfkante 62 ausgebildet sind. Um dies zu erreichen ist das Verteilorgan 11 gemäss Fig. 5 in einem unteren Bereich mit einem schrägen Wandstück 14 keilförmig ausgebildet.

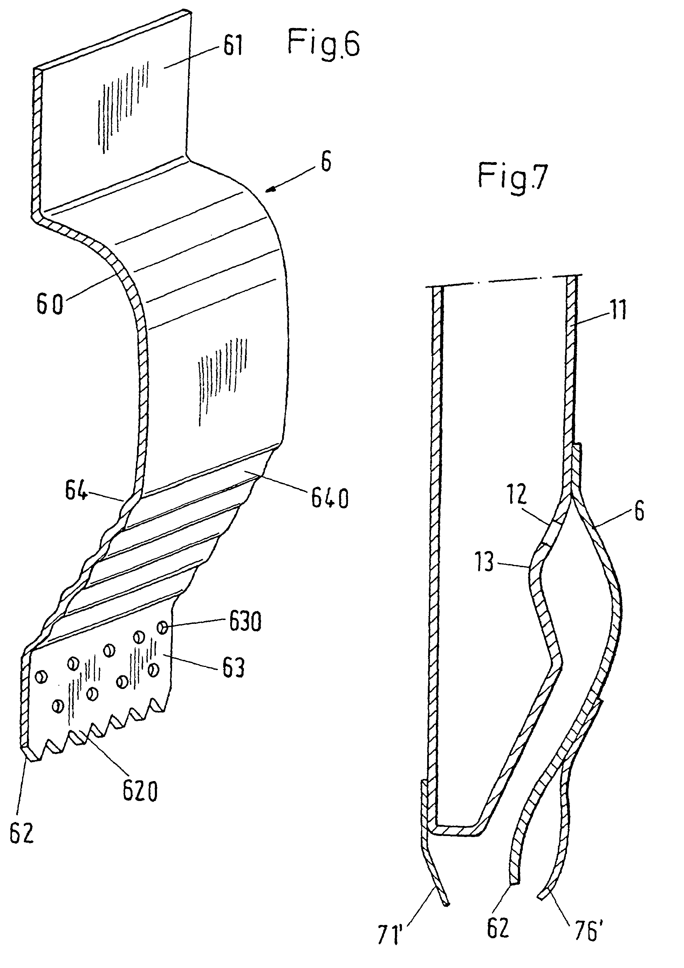

Die Schirme 6 der erfindungsgemässen Flüssigkeitsverteiler 1 können - wie dies in Fig. 6 illustriert ist - zur günstigen Beeinflussung der Flüssigkeitsfilme 51 jeweils eine Strukturierung durch Rillen 640 und/oder Perforierungen 630 aufweisen. Die Abtropfkante 62 kann mit Zacken 620 versehen sein.

Fig. 7 zeigt ein weiteres Ausführungsbeispiel, bei dem Schürzen 76', 71' zur Beeinflussung der Strömung gekrümmt ausgebildet sind. Die Austrittsöffnung 12 ist wie bereits in Fig. 2a in einem geneigten Teil einer Seitenwand 13 des Verteilorgans 11 angeordnet. Bei dieser Ausführungsform bildet das Verteilorgan 11 einschliesslich des Schirms 6 ein Hindernis für das nach oben strömende Gas, das mit einem geringeren Strömungswiderstand als bei den Beispielen der Figuren 3 bis 5 verbunden ist.

## Patentansprüche

1. Flüssigkeitsverteiler (1), insbesondere für Packungskolonnen (2), mit mindestens einem rohr- oder trogförmigen Verteilorgan (11), das zu einer Abgabe von Flüssigkeit (5) in Form von Strahlen (50) Austrittsöffnungen (12) aufweist, und mit vor den Austrittsöffnungen angeordneten Schirmen (6), auf welchen die auftreffenden Flüssigkeitsstrahlen (50) zu abfliessenden Flüssigkeitsfilmen (51) umgeformt werden und welche die Austrittsöffnungen vor einem nach oben strömenden Gasstrom (4) abschirmen,
**dadurch gekennzeichnet, dass** bei einer maximalen Abgabe von Flüssigkeit die Flüssigkeitsstrahlen (50) auf den Schirmen (6) unter Winkeln (α) auftreffen, die kleiner als 60°, vorzugsweise kleiner als 10° sind.

2. Flüssigkeitsverteiler nach Anspruch 1, **dadurch gekennzeichnet, dass** jeder Schirm (6) in einem vertikalen sowie strahlparallelen Schnitt die Form einer sigmoiden Kurve hat, wobei diese Kurve auch ganz oder teilweise durch einen Streckenzug gegeben sein kann, und dass die sigmoide Kurve in dem Bereich (60), in dem die Flüssigkeitsstrahlen (50) auf den Schirm auftreffen, mit Vorteil nach unten gekrümmt ist und insbesondere eine weitgehend konstante Krümmung aufweist.

3. Flüssigkeitsverteiler nach Anspruch 2, **dadurch gekennzeichnet, dass** der Auftreffbereiche (60) so geformt ist, dass die Strahlen angenähert tangential auf den Schirmen (6) auftreffen.

4. Flüssigkeitsverteiler nach einem der Ansprüche 1 bis 3, **dadurch gekennzeichnet, dass** die Schirme (6) Abtropfkanten (62) aufweisen, die horizontal ausgerichtet sind und die geradlinig oder gezackt ausgebildet sein können.

5. Flüssigkeitsverteiler nach Anspruch 4, **dadurch gekennzeichnet, dass** unmittelbar über den Abtropfkanten (62) streifenförmige Bereiche (63) vorgesehen sind, die weitgehend in vertikalen Ebenen liegen.

6. Flüssigkeitsverteiler nach einem der Ansprüche 1 bis 5, **dadurch gekennzeichnet, dass** die Schirme (6) zur Beeinflussung der Flüssigkeitsfilme (51) jeweils eine Strukturierung durch Rillen (640) und/oder Perforierungen (630) aufweisen.

7. Kolonnen (2) mit einem Flüssigkeitsverteiler (1) gemäss einem der Ansprüche 1 bis 6, **dadurch gekennzeichnet, dass** eine Mehrzahl von parallelen Verteilorganen (11) einen in der Kolonne nach oben strömenden Gasstrom (4) in mehrere Teilströme (40', 40", 40) unterteilt, so dass sich unter den Verteilorganen Stauzonen (42) ausbilden, und dass Abtropfkanten (62) der Schirme (6) innerhalb der Stauzonen angeordnet sind.

8. Kolonne nach Anspruch 7, **dadurch gekennzeichnet, dass** die Verteilorgane (11) und Schirme (6) so geformt sind, dass jeweils in den Umgebungen der Stauzonen die Teilströme (40', 40") weitgehend spiegelsymmetrisch zueinander und bezüglich vertikalen Ebenen durch die Abtropfkanten (62) ausgebildet sind.

9. Kolonne nach Anspruch 7 oder 8, **dadurch gekennzeichnet, dass** zur Beeinflussung der Strömung (4) in den Bereichen der Stauzonen (42) flankierend zu den Schirmen (6) zusätzlich Schürzen (71', 76') vorgesehen sind.

10. Kolonne nach einem der Ansprüche 7 bis 9, **dadurch gekennzeichnet, dass** der Verteiler (1) über einer Packung (3) angeordnet ist, die eine geordnete Struktur aufweist, wobei insbesondere die Packung eine "Wirbelpackung" oder eine Packung mit "Kreuzkanalstruktur" ist.

## Claims

1. Liquid distributor (1), in particular for packing columns (2), comprising at least one tubular or trough-like distributor member (11) having outlet openings (12) for an output of liquid (5) in the form of jets (50), and comprising screens (6) which are arranged ahead of the outlet openings and onto which the incident liquid jets (50) are deformed to flowing liquid films (51) and which screen the outlet openings against an upwardly flowing gas stream (4),
**characterised in that** in the event of a maximum output of liquid the liquid jets (50) are incident onto the screens (6) at angles (α) which are less than 60°, preferably less than 10°.

2. Liquid distributor in accordance with claim 1 **characterised in that** each screen (6) has the shape of a sigmoid curve in a vertical as well as jet-parallel section, with it also being possible for this curve to be given wholly or partly by a tractor curve; and **in that** the sigmoid curve is advantageously curved downwardly and in particular has a largely constant curvature in the region (60) in which the liquid jets are incident on the screen.

3. Liquid distributor in accordance with claim 2 **characterised in that** the region of incidence (60) is shaped in such a manner that the jets are approximately tangentially incident onto the screens (6).

4. Liquid distributor in accordance with any one of the claims 1 to 3 **characterised in that** the screens (6) have drip edges (62) which are horizontally oriented and which can be formed rectilinearly or in a zigzagged manner.

5. Liquid distributor in accordance with claim 4 **characterised in that** strip-like regions (63) which largely lie in vertical planes are provided directly above the drip edges (62).

6. Liquid distributor in accordance with any one of the claims 1 to 5 **characterised in that** the screens (6) for influencing the liquid films (51) each have a structuring formed by grooves (640) and/or perforations (630).

7. Columns (2) with a liquid distributor (1) in accordance with any one of the claims 1 to 6 **characterised in that** a plurality of parallel distributor members (11) subdivides a gas stream (4) flowing upwardly in the column into a plurality of partial streams (40', 40", 40) so that stagnation zones (42) form beneath the distributor members; and **in that** drip edges (62) of the screens (6) are arranged inside the stagnation zones.

8. Column in accordance with claim 7 **characterised in that** the distributor members (11) and screens (6) are shaped in such a manner that in the vicinities of the stagnation zones the partial streams (40', 40") each develop with largely mirror symmetry with respect to one another and with respect to vertical planes through the drip edges (62).

9. Column in accordance with claim 7 or claim 8 **characterised in that** additional aprons (71', 76') are provided in the regions of the stagnation zones (42) flanking the screens (6) for influencing the flow (4).

10. Column in accordance with any one of the claims 7 to 9 **characterised in that** the distributor (1) is arranged above a packing (3) which has an ordered structure, with the packing being in particular a "turbulence packing" or a packing with "cross channel structure".

## Revendications

1. Distributeur de liquide (1), en particulier pour des colonnes de garnissage (2), avec au moins un organe de distribution en forme de tube ou d'auge (11) qui, pour une émission du liquide (5) sous forme de jets (50), présente des ouvertures de sortie (12), et avec des écrans (6) disposés devant les ouvertures de sortie, sur lesquels les jets de liquide incidents (50) sont transformés en films de liquide qui s'écoulent (51) et qui protègent les ouvertures de sortie contre un flux de gaz (4) s'écoulant vers le haut, **caractérisé en ce que** lors d'une émission maximale de liquide, les jets de liquide (50) sur les écrans (6) sont incidents sous des angles (α) qui sont plus petits que 60°, de préférence plus petits que 10°.

2. Distributeur de liquide selon la revendication 1, **caractérisé en ce que** chaque écran (6), en une coupe verticale ainsi que parallèle au jet, a la forme d'une courbe sigmoïde, où cette courbe peut être réalisée aussi entièrement ou partiellement par une section courbée, et **en ce que** la courbe sigmoïde, dans la zone (60), dans laquelle les jets de liquide (50) frappent l'écran, est courbée avantageusement vers le bas et présente en particulier une courbure sensiblement constante.

3. Distributeur de liquide selon la revendication 2, **caractérisé en ce que** la zone d'incidence (60) est formée de façon que les jets heurtent approximativement tangentiellement les écrans (6).

4. Distributeur de liquide selon l'une des revendications 1 à 3, **caractérisé en ce que** les écrans (6) présentent des arêtes d'égouttage (62), qui sont orientées horizontalement et qui peuvent être rectilignes ou dentées.

5. Distributeur de liquide selon la revendication 4, **caractérisé en ce que** sont prévues directement au-dessus des arêtes d'égouttage (62) des zones en forme de bande (63) qui se situent sensiblement dans des plans verticaux.

6. Distributeur de liquide selon l'une des revendications 1 à 5, **caractérisé en ce que** les écrans (6), pour agir sur les films de liquide (51), présentent à chaque fois une structuration par des rainures (640) et/ou des perforations (630).

7. Colonne (2) avec un distributeur de liquide (1) selon l'une des revendications 1 à 6, **caractérisée en ce que** plusieurs organes de distribution parallèles (11) divisent un flux de gaz (4) remontant dans la colonne dans plusieurs flux partiels (40', 40", 40) de façon que sous les organes de distribution, des zones d'accumulation (42) se forment, et **en ce que** des arêtes d'égouttage (62) des écrans (6) sont disposées à l'intérieur des zones d'accumulation.

8. Colonne selon la revendication 7, **caractérisée en ce que** les organes de distribution (11) et les écrans (6) sont formés de façon que respectivement dans l'environnement des zones d'accumulation, les flux partiels (40', 40") sont réalisés dans une grande mesure d'une manière spéculairement symétrique et par rapport aux plans verticaux par les arêtes d'égouttage (62).

9. Colonne selon la revendication 7 ou 8, **caractérisée en ce que** pour agir sur l'écoulement (4), additionnellement des tabliers (71', 76') sont prévus au voisinage des zones d'accumulation (42) de manière contiguë aux écrans (6).

10. Colonne selon l'une des revendications 7 à 9, **caractérisée en ce que** le distributeur (1) est disposé au-dessus d'un garnissage (3) qui présente une structure ordonnée, où en particulier le garnissage est un « garnissage à lit fluidisé » ou un garnissage avec une « structure de canaux croisés ».
